Europäisches Patentamt

European Patent Office

Office européen des brevets

(19)

(11)     **EP 1 153 212 B1**

(12)     **FASCICULE DE BREVET EUROPEEN**

(45) Date de publication et mention
de la délivrance du brevet:
**05.11.2003  Bulletin 2003/45**

(21) Numéro de dépôt: **00903774.8**

(22) Date de dépôt: **10.02.2000**

(51) Int Cl.[7]: **F02D 41/18**, F02D 21/08

(86) Numéro de dépôt international:
**PCT/FR00/00320**

(87) Numéro de publication internationale:
**WO 00/047884 (17.08.2000 Gazette 2000/33)**

(54) **PROCEDE DE DETERMINATION DU DEBIT D'AIR ENTRANT DANS UN MOTEUR A COMBUSTION INTERNE EQUIPE D'UN CIRCUIT DE RECIRCULATION DES GAZ D'ECHAPPEMENT**

VERFAHREN ZUR ERMITTLUNG DES ZUGEFÜHRTEN LUFTMASSENSTROMES EINER BRENNKRAFTMASCHINE MIT ABGASRÜCKFÜHRUNGSSYSTEM

METHOD FOR DETERMINING AIR FLOW RATE ENTERING AN INTERNAL COMBUSTION ENGINE EQUIPPED WITH EXHAUST GAS RECYCLING

(84) Etats contractants désignés:
**DE ES GB IT**

(30) Priorité: **12.02.1999  FR 9901724**

(43) Date de publication de la demande:
**14.11.2001  Bulletin 2001/46**

(73) Titulaire: **Renault s.a.s.**
**92100 Boulogne Billancourt (FR)**

(72) Inventeur: **ABIDA, Jamil**
**F-92500 Rueil Malmaison (FR)**

(56) Documents cités:
**DE-A- 19 525 815          DE-A- 19 756 919**
**US-A- 4 404 946           US-A- 5 205 260**
**US-A- 5 522 365**

## Description

La présente invention est relative à un procédé de détermination du débit d'air entrant dans un moteur à combustion interne équipé d'un circuit de recirculation des gaz d'échappement du moteur dans le collecteur d'admission dudit moteur et d'une soupape de commande du débit des gaz d'échappement recirculés dans ledit collecteur d'admission.

On équipe aujourd'hui couramment les moteurs à combustion interne, notamment du type Diesel, conçus en particulier pour propulser des véhicules automobiles, de circuits de recirculation des gaz d'échappement du moteur dans le collecteur d'admission de ce dernier. On sait qu'une telle recirculation permet de diminuer les émissions d'oxydes d'azote du moteur, qui sont des espèces chimiques particulièrement nocives. Par contre, cette recirculation peut accroître la quantité de fumée dans les gaz d'échappement du moteur, si elle n'est pas correctement réglée. Il en est de même de la quantité de carburant injecté dans le moteur.

C'est pourquoi un calculateur électronique est couramment chargé de gérer le fonctionnement du moteur en calculant notamment la quantité de gaz d'échappement à recirculer et la quantité de carburant à injecter, en fonction notamment de la quantité d'air aspirée par les cylindres du moteur.

Pour mesurer cette quantité d'air, on connaît des débitmètres, par exemple à fil chaud placés à l'entrée du collecteur d'admission du moteur pour délivrer une tension électrique fonction du débit d'air. Un tel capteur présente l'inconvénient d'être coûteux. En outre, le signal qu'il délivre exige des corrections car il est perturbé, notamment par les gaz d'échappement recirculés et par des retours d'ondes de pression (voir les brevets JP 10 169499, US 5 339 681, US 5 205 260, WO 97 35106, DE 19 613176, EP 589 517, US 5 635 635).

On a aussi proposé de se passer d'un débitmètre et de calculer la quantité d'air aspirée à partir de la pression et de la température de l'air dans le collecteur d'admission du moteur, et du régime de ce moteur. Quand, outre l'air, des gaz d'échappement sont injectés dans le collecteur d'admission du moteur, cette démarche n'est évidemment plus possible.

On a encore proposé d'évaluer le débit d'air admis avec un capteur de pression d'air d'admission et un algorithme de calcul du débit, à plusieurs pas de calcul successifs. Il s'est avéré qu'un tel algorithme est difficile à calibrer et coûteux en temps de calcul (voir les brevets des USA n° 5 270 935, 5 273 019, 5 293 553 et 5 497 329).

Une autre solution consiste à mesurer la quantité de carburant injecté dans les cylindres du moteur et à détecter un éventuel excès d'air entrant dans les cylindres, à l'aide d'une sonde à oxygène placée dans la tubulure d'échappement du moteur. Cette sonde rend alors compte de l'évolution de l'excès d'air avec un retard qui est susceptible d'affecter la précision du débit d'air pris en compte, en particulier lors d'accélérations ou de décélérations du moteur.

La présente invention a donc pour but de fournir un procédé de détermination du débit d'air entrant dans un moteur à combustion interne équipé d'un circuit de recirculation des gaz d'échappement, qui ne présente aucun des inconvénients des procédés évoqués ci-dessus et qui, en particulier, soit de mise en oeuvre peu coûteuse et de précision adéquate.

La présente invention a aussi pour but de fournir un tel procédé, plus particulièrement destiné à un moteur Diesel et, plus particulièrement encore, à un tel moteur équipé d'un dispositif de suralimentation en air.

On atteint ces buts de l'invention, ainsi que d'autres qui apparaîtront à la lecture de la description qui va suivre, avec un procédé de détermination du débit d'air entrant dans un moteur à combustion interne équipé d'un circuit de recirculation des gaz d'échappement du moteur dans le collecteur d'admission dudit moteur et d'une soupape de commande du débit des gaz d'échappement recirculés dans ledit collecteur d'admission, ce procédé étant remarquable en ce qu'on calcule ledit débit d'air ($Q_0$) à soupape de commande fermée, en fonction du régime du moteur, de la pression dans le collecteur d'admission, de la température de l'air aspiré par ledit collecteur, et d'un rendement de remplissage des cylindres du moteur, et ce qu'on calcule le débit d'air ($Q_{air}$) à soupape de commande ouverte à partir de l'expression :

$$Q_{air} = \frac{Q_o - f_1 f_2}{1 + C_4 \cdot f_2}$$

où $f_1$ et $f_2$ sont des facteurs correcteurs et $C_4$ un facteur de calibration fonction du régime du moteur, $f_2$ quantifiant l'effet de la répartition des gaz d'échappement entre le collecteur d'admission, une turbine et son circuit de décharge sur le débit d'air.

Comme on le verra dans la suite, le procédé suivant l'invention permet à un "estimateur" logiciel de calculer, à partir d'une modélisation simplifiée du moteur et de ses actionneurs, une valeur précise du débit d'air, à l'aide de signaux en provenance de capteurs normalement associés à ce moteur et de tables calibrées au préalable.

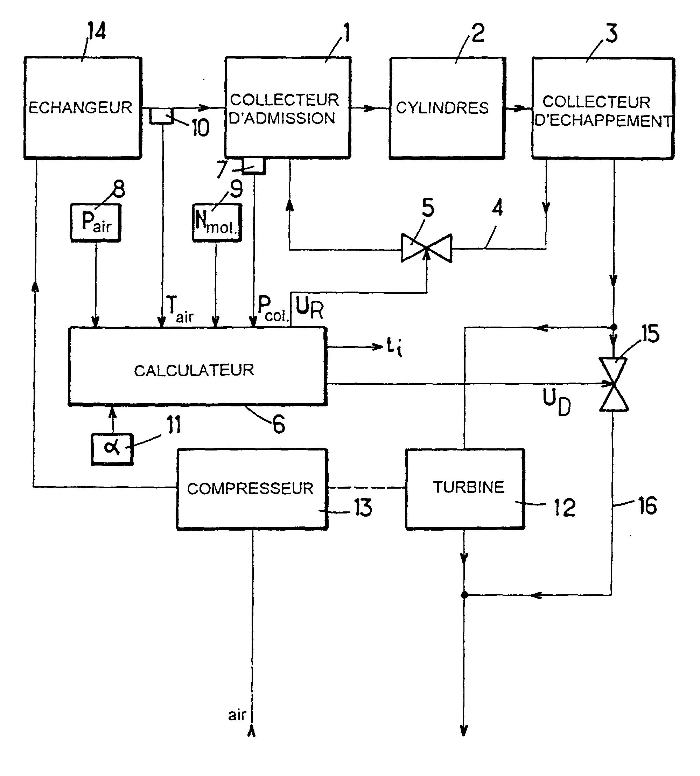

D'autres caractéristiques et avantages du procédé suivant la présente invention apparaîtront à la lecture de la description qui va suivre et à l'examen du dessin annexé dans lequel la figure unique représente schématiquement un dispositif pour la mise en oeuvre du procédé suivant la présente invention.

Sur cette figure, il apparaît que ce dispositif comprend d'abord un moteur à combustion interne de préférence, mais non exclusivement, du type Diesel, ce moteur étant schématisé en trois blocs 1,2 et 3 représentant respectivement son collecteur d'admission, ses cylindres et son collecteur d'échappement. Ce moteur est équipé d'un circuit de recirculation des gaz d'échappement constitué essentiellement par une tubulure 4 de renvoi de parties des gaz d'échappement sortant du collecteur d'échappement dans le collecteur d'admission 1, à travers une soupape réglable 5 dont l'ouverture est commandée par un signal $U_R$ émis par un calculateur 6 de gestion du moteur (1,2,3).

Comme on l'a vu en préambule de la présente description, un tel calculateur est couramment associé au moteur pour en gérer le fonctionnement. A cet effet, il reçoit des signaux de mesure de divers capteurs de paramètres de fonctionnement du moteur et calcule des ordres de commande d'actionneurs tels que la soupape 5 et des injecteurs (non représentés) de carburant dans les cylindres du moteur, injecteurs dont il commande le temps d'ouverture $t_i$ en fonction de la quantité de carburant, du gazole dans le cas d'un moteur Diesel, à injecter, quantité elle-même calculée à partir de divers paramètres de fonctionnement du moteur et, éventuellement, de diverses stratégies de fonctionnement de ce moteur.

C'est ainsi que le calculateur reçoit des signaux d'un capteur 7 de la pression $P_{col}$ régnant dans le collecteur d'admission 1 du moteur, d'un capteur 8 de la pression $P_{amb}$ de l'air ambiant, d'un capteur 9 du régime $N_{mot}$ du moteur, d'un capteur 10 de la température $T_{air}$ de l'air entrant dans le collecteur d'admission 1, d'un capteur 11 de l'angle $\alpha$ de la pédale d'accélérateur, propre à mesurer la demande de couple formulée par le conducteur du véhicule, etc., etc.... Tout ceci est bien connu de l'homme de métier et n'exige pas une description plus développée.

Dans la configuration préférée du dispositif pour la mise en oeuvre du procédé suivant l'invention, ce dispositif comprend en outre des moyens pour suralimenter le moteur en air. Ces moyens comprennent classiquement une turbine 12 actionnée par la détente d'une partie des gaz d'échappement chaud du moteur, cette turbine entraînant un compresseur d'air 13 qui alimente le collecteur d'admission 1 du moteur, de préférence à travers un échangeur 14 propre à refroidir l'air sortant du compresseur.

La puissance fournie par les gaz d'échappement à la turbine peut être modulée à l'aide d'une soupape de décharge 15 disposée dans un conduit 16 monté en dérivation sur la turbine 12.

Suivant un premier mode de réalisation, cette soupape 15 prend la forme d'une électrovanne dont le taux d'ouverture est commandé par un signal $U_D$ délivré par le calculateur 6, le plus souvent de manière à maintenir la pression dans le collecteur d'admission 1 à une valeur prédéterminée, par une régulation en boucle fermée faisant intervenir le signal délivré par le capteur 7 de la pression $P_{col}$.

Suivant un autre mode de réalisation, la soupape 15 est passive et tarée pour s'ouvrir sous l'effet d'une pression prédéterminée régnant soit dans le collecteur d'admission, soit dans le collecteur d'échappement.

Dans tous les cas, il apparaît qu'il est nécessaire de connaître la pression dans le collecteur d'admission et le débit d'air. Une solution connue consiste à installer un débitmètre d'air en amont du compresseur 13 et un capteur de pression tel que celui référencé 7, dans le collecteur d'admission 1. Cette solution à deux capteurs est évidemment coûteuse.

La présente invention offre une solution plus économique en supprimant le capteur de débit d'air et en permettant de calculer le débit d'air en utilisant seulement des grandeurs connues du calculateur 6, soit par les capteurs qui lui sont associés, soit par les calculs qu'il développe lui-même.

A cet effet, le calculateur 6 est dûment programmé avec un logiciel d'estimation du débit d'air ou "estimateur", développant l'algorithme de calcul décrit ci-dessous. Suivant cet algorithme, l'estimateur calcule d'abord le débit d'air $Q_0$ aspiré par le moteur quand la soupape 5 est fermée, c'est-à-dire en l'absence d'une recirculation de gaz d'échappement. Dans cette situation, le débit $Q_0$ peut être estimé à l'aide de la formule suivante :

$$Q_0 = \frac{V_{cyl} \cdot N_{mot}}{K} \, \rho \cdot C_0 \qquad (1)$$

où :

- $V_{cyl}$ est la cylindrée du moteur,
- $\rho = \dfrac{P_{col}}{R_{air} \cdot T_{air}}$ , densité de l'air où $R_{air}$ est la constante de l'air dans la loi de Mariotte,
- $C_0$ est un rendement de remplissage des cylindres du moteur, tiré d'une table à deux entrées $N_{mot}$ et $\rho$, mise en mémoire dans le calculateur 6,
- $K$ un coefficient fonction du nombre de cylindres du moteur. Par exemple, pour un moteur à quatre cylindres, $K = 120$.

Ainsi, si le signal de commande $U_R$ délivré par le calculateur 6 à la soupape 5 est propre à maintenir celle-ci fermée, soit par exemple $U_R = 0$, le débit d'air entrant dans le moteur, tel qu'évalué suivant la présente invention, prend la valeur $Q_0$ tel que donné par la formule (1) ci-dessus.

Si par contre la valeur de $U_R$ calculée par le calculateur 6 est telle que $U_R \neq 0$, ce qui correspond donc à une situation dans laquelle il y a recirculation de gaz d'échappement, le calculateur tire la valeur $Q_{air}$ du débit d'air aspiré par le moteur de l'expression :

$$Q_{air} = \frac{Q_o - f_1 \cdot f_2}{1 + C_4 \cdot f_2} \qquad (2)$$

où :

- $f_1, f_2$ sont des facteurs correcteurs quantifiant, respectivement, l'effet de l'énergie contenue dans les gaz d'échappement sur le débit d'air et l'effet de la répartition de ces gaz entre le collecteur d'admission 1, la turbine 12 et le conduit de décharge sur lequel est placée la soupape 15,
- $C_4$ est un facteur de calibration, fonction du régime du moteur.

Pour calculer $Q_{air}$, le calculateur doit alors calculer séparément $Q_0$, $f_1$ et $f_2$.

$Q_0$ est calculé suivant la formule (1) ci-dessus, à partir du régime $N_{mot}$, de la pression $P_{col}$ au collecteur d'admission du moteur, de la température $T_{air}$ de l'air à la sortie de l'échangeur 14 et de la table donnant $C_0$ en fonction du régime du moteur $N_{mot}$ et de $\rho$.

Le facteur correcteur $f_1$ est calculé à partir de la formule suivante :

$$f_1 = \frac{k_1 \cdot M_{go} \cdot N_{mot}}{T_{air}} C_1 \qquad (3)$$

où :

- $k_1$ est un coefficient
- $M_{go}$ est la masse de carburant, calculée par le calculateur 6, à injecter dans les cylindres du moteur,
- $C_1$ est un coefficient représentatif de la fraction d'énergie apportée par la combustion de cette masse de carburant et qui se transforme en chaleur portée par les gaz d'échappement, cette grandeur $C_1$ étant tirée d'une table à deux entrées $N_{mot}$ et $M_{go}$, mise en mémoire dans le calculateur.

Le facteur correcteur $f_2$ est tiré par le calculateur de la formule suivante :

$$f_2 = \sqrt{\frac{P_{col}}{P_{amb}}} \cdot \frac{C_2}{C_3} \qquad (4)$$

où :

- $P_{amb}$ et $P_{col}$ sont tirés de signaux délivrés par les capteurs 8 et 7 respectivement,
- $C_2$ est la section efficace de la soupape 5, fonction du signal de commande $U_R$ de cette soupape, élaboré par le calculateur 6,
- $C_3$ est un coefficient représentatif de l'effet du taux d'ouverture de la soupape 15 de décharge, tiré d'une table à deux entrées $N_{mot}$, $P_{col}$ mise en mémoire dans le calculateur.

Il s'avère que la modélisation du débit d'air, telle que décrite ci-dessus, tient bien compte des caractéristiques du moteur et de ses actionneurs et permet d'obtenir une estimation précise du débit d'air qui remplace avantageusement, notamment au plan du coût, une mesure tirée d'un débitmètre, conformément au but poursuivi par la présente invention.

Bien entendu, l'invention n'est pas limitée au mode de réalisation décrit et représenté qui n'a été donné qu'à titre d'exemple. C'est ainsi que la formule 1 ci-dessus donnant $Q_0$ pour un moteur à quatre cylindres pourrait être adaptée sans difficulté à un moteur comptant un nombre de cylindres différent, par une division convenable de la cylindrée $V_{cyl}$ du moteur.

De même, bien que l'invention ait été décrite dans l'environnement préféré d'un moteur Diesel à recirculation de gaz d'échappement et suralimentation en air, l'invention est aussi aisément adaptable à un moteur utilisant un autre type de carburant, de l'essence par exemple, et suralimenté ou non en air.

### Revendications

1. Procédé de détermination du débit d'air entrant dans un moteur (1,2,3) à combustion interne équipé d'un circuit (4,5) de recirculation des gaz d'échappement du moteur dans le collecteur d'admission (1) dudit moteur (1,2,3) et d'une soupape (5) de commande du débit de gaz d'échappement recirculés dans ledit collecteur d'admission (1), **caractérisé en ce qu'**on calcule ledit débit d'air ($Q_0$) à soupape (5) de commande fermée, en fonction du régime ($N_{mot}$) du moteur, de la pression ($P_{col}$) dans le collecteur d'admission (1), de la température ($T_{air}$) de l'air aspiré par ledit collecteur (1) et d'un rendement de remplissage ($C_0$) des cylindres du moteur, et **en ce qu'**on calcule de débit d'air ($Q_{air}$) à soupape de recirculation ouverte à partir du modèle :

$$Q_{air} = \frac{Q_0 - f_1 \cdot f_2}{1 + C_4 \cdot f_2}$$

où ($f_1$) et ($f_2$) sont des facteurs correcteurs et ($C_4$) un facteur de calibration fonction du régime ($N_{mot}$) du moteur, f2 quantifiant l'effet de la répartition des gaz d'échappement entre le collecteur d'admission, une turbine et son circuit de décharge sur le débit d'air.

2. Procédé conforme à la revendication 1, **caractérisé en ce qu'**on calcule le débit d'air ($Q_0$) à soupape (5) de commande fermée à l'aide de la formule :

$$Q_0 = \frac{V_{cyl} \cdot N_{mot}}{K} \rho \cdot C_0$$

où ($V_{cyl}$) est la cylindrée du moteur, ($\rho$) la densité de l'air, ($C_0$) le rendement de remplissage du moteur, fonction du régime $N_{mot}$ de ce moteur et de la densité de l'air, K un coefficient fonction du nombre de cylindres du moteur.

3. Procédé conforme à la revendication 1 ou 2, **caractérisé en ce qu'**on tire ledit facteur correcteur ($f_1$) de la formule :

$$f_1 = \frac{k_1 \cdot M_{go} \cdot N_{mot}}{T_{air}} \, C_1$$

où :

- ($k_1$) est un coefficient et ($M_{go}$) une masse de carburant à injecter dans le moteur, calculée par un calculateur (6) de gestion du fonctionnement du moteur (1,2,3).
- $C_1$ est une coefficient représentatif de la fraction de l'énergie apportée par la combustion de cette masse de carburant et qui se transforme en chaleur portée par les gaz d'échappement, cette grandeur $C_1$ étant tirée d'une table à deux entrées $N_{mot}$ et $M_{go}$, mise en mémoire dans le calculateur.

4. Procédé conforme à la revendication 3, **caractérisé en ce qu'**on calcule le facteur correcteur ($f_2$) à l'aide de la formule suivante :

$$f_2 = \sqrt{\frac{P_{col}}{P_{amb}}} \cdot \frac{C_2}{C_3}$$

où :

- ($P_{amb}$) est la pression d'air ambiante, ($C_2$) la section efficace de passage de la soupape (5) de commande du débit des gaz d'échappement recirculés, fonction d'un signal de commande ($U_R$)de ladite soupape (5) élaboré par un calculateur (6), ($C_3$) un coefficient tiré d'une table à deux entrées constituées par le régime du moteur ($N_{mot}$) et la pression dans le collecteur d'admission ($P_{col}$).

5. Procédé conforme à la revendication 4, adapté à un moteur équipé de moyens (12,13,14) de suralimentation en air comprenant une turbine (12) alimentée par une fraction des gaz d'échappement réglée par une soupape de décharge (15) commandée par le calculateur (6) et montée en dérivation sur ladite turbine (12), **caractérisé en ce que** ledit coefficient ($C_3$) est représentatif de l'effet du taux d'ouverture de ladite soupape de décharge (15).

6. Procédé conforme à l'une quelconque des revendications précédentes, adapté à un moteur du type Diesel.

**Patentansprüche**

1. Verfahren zur Ermittlung des in einen Verbrennungsmotor (1, 2, 3) eintretenden Luftstroms, der mit einem Kreis (4, 5) zur Rückführung der Abgase des Motors in den Ansaugkrümmer (1) des Motors (1, 2, 3) und einem Ventil (5) zum Steuern des Stromes der Abgase, die in den Ansaugkrümmer (1) rückgeführt werden, ausgestattet ist,
**dadurch gekennzeichnet, dass**
man den Luftstrom ($Q_0$) bei geschlossenem Ventil (5) berechnet, abhängig von der Drehzahl ($N_{mot}$) des Motors, von dem Druck ($P_{col}$) in dem Ansaugkrümmer (1), von der Temperatur ($T_{air}$) der durch die Leitung (1) angesaugten Luft und von der Ausbeute der Füllung ($C_0$) der Zylinder, und dass man den Luftstrom ($Q_{air}$) bei geöffnetem Rückführ-Ventil ausgehend von dem Modell:

$$Q_{air} = \frac{Q_0 - f_1 f_2}{1 + C_4 \cdot f_2}$$

berechnet, wobei $f_1$ und $f_2$ Korrekturfaktoren sind und $C_4$ ein Kalibrierungsfaktor ist, der von der Drehzahl ($N_{mot}$) des Motors abhängt, wobei $f_2$ die Wirkung der Verteilung der Abgase zwischen dem Ansaugkrümmer, einer Turbine und ihrem Entladungskreis auf den Luftstrom quantifiziert.

2. Verfahren gemäß Anspruch 1, **dadurch gekennzeichnet, dass** man den Luftstrom ($Q_0$) bei geschlossenem Ventil (5) mit Hilfe der folgenden Formel berechnet:

$$Q_0 = \frac{V_{cyl} \cdot N_{mot}}{K} \cdot \rho \cdot C_0$$

wobei ($V_{cyl}$) der Hubraum des Motors, ($\rho$) die Luftdichte, ($C_0$) die Ausbeute der Füllung des Motors, der von der Drehzahl ($N_{mot}$) dieses Motors und von der Luftdichte abhängt, und K ein Koeffizient ist, der von der Anzahl der Zylinder des Motors abhängt.

3. Verfahren gemäß einem der Ansprüche 1 oder 2, **dadurch gekennzeichnet, dass** man den Korrekturfaktor ($f_1$) aus der Formel:

$$f_1 = \frac{k_1 \cdot M_{go} \cdot N_{mot}}{T_{air}} \, C_1$$

bezieht, wobei

- ($k_1$) ein Koeffizient und ($M_{go}$) eine Menge von in den Motor einzuspritzenden Brennstoffs ist, berechnet durch einen Rechner (6) zur Verwaltung des Betriebs des Motors (1, 2, 3),

- ($C_1$) ein Koeffizient ist, der den Bruchteil von Energie repräsentiert, der durch die Verbrennung dieser Menge an Brennstoff freigesetzt wird und sich in von den Abgasen getragene Hitze verwandelt, wobei diese Größe ($C_1$) einer Tabelle mit zwei Einträgen $N_{mot}$ und $M_{go}$ entnommen ist, die in dem Rechner gespeichert ist.

4. Verfahren gemäß Anspruch 3, **dadurch gekennzeichnet, dass** man den Korrekturfaktor ($f_2$) mit Hilfe der folgenden Formel berechnet:

$$f_2 = \sqrt{\frac{P_{col}}{P_{amb}}} \cdot \frac{c_2}{c_3}$$

wobei:

- ($P_{amb}$) der Druck der umgebenden Luft ist,
- ($c_2$) der Wirkungsquerschnitt des Durchlasses des Ventils (5) zum Steuern des Stroms der rückgeführten Abgase ist, abhängig von einem Steuersignal ($U_R$) des Ventils (5), berechnet durch einen Rechner (6),
- ($c_3$) ein Koeffizient ist, der einer Tabelle mit zwei Einträgen entnommen ist, welche die Drehzahl des Motors ($N_{mot}$) und den Druck in dem Ansaugkrümmer ($P_{col}$) darstellen.

5. Verfahren gemäß Anspruch 4, angepasst an einen Motor, der mit Mitteln (12, 13, 14) zur Aufladung mit Luft, umfassend eine Turbine (12), die mit einem Bruchteil der Abgase versorgt wird, welcher von einem Entladeventil (15) geregelt wird, welches von einem Rechner (6) gesteuert wird und neben der Turbine montiert ist, **dadurch gekennzeichnet, dass** der Koeffizient ($c_3$) repräsentativ ist für die Wirkung des Öffnungsgrades des Entladeventils (15).

6. Verfahren gemäß einem der vorhergehenden Ansprüche, angepasst an einen Motor vom Typ Diesel.

**Claims**

1. A method for calculating the flow of air entering an internal combustion engine (1, 2, 3) equipped with a circuit (4, 5) for recycling the engine exhaust gases to the intake manifold (1) of the engine (1, 2, 3) and a valve (5) controlling the flow of exhaust gases recycled to this intake manifold (1), **characterised in that** the flow of air ($Q_0$) is calculated, with the control valve (5) closed, as a function of the speed ($N_{mot}$) of the engine, the pressure ($P_{col}$) in the intake manifold (1), the temperature ($T_{air}$) of the air taken in by the manifold (1) and a filling performance ($C_0$) of the cylinders of the engine, and **in that** the air flow ($Q_{air}$) is calculated, with the recycling valve open, from the model:

$$Q_{air} = Q_0 - f_1 \cdot f_2/1 + C_4 \cdot f_2$$

Where ($f_1$) and ($f_2$) are correction factors and ($C_4$) is a calibration factor which is a function of the speed ($N_{mot}$) of the engine, $f_2$ quantifying the effect of the distribution of the exhaust gases between the intake manifold, a turbine and its air flow discharge circuit.

2. A method as claimed in claim 1, **characterised in that** the air flow ($Q_0$) is calculated, with the control valve (5) closed, by means of the formula:

$$Q_0 = (V_{cyl} \cdot N_{mot} / K)\rho \cdot C_0$$

where ($V_{cyl}$) is the cubic capacity of the engine, ($\rho$) is the density of the air, ($C_0$) is the filling performance of the engine as a function of the speed $N_{mot}$ of this engine and density of the air, and K is a coefficient which is a function of the number of cylinders of the engine.

3. A method as claimed in claim 1 or 2, **characterised in that** the correction factor ($f_1$) is derived from the formula:

$$f_1 = (k_1 \cdot M_{go} \cdot N_{mot} / T_{air}) C_1$$

where:

- ($k_1$) is a coefficient and ($M_{go}$) is a fuel mass to be injected into the engine, calculated by an computer managing the operation of the engine (1, 2, 3);
- ($C_1$) is a coefficient representative of the fraction of the energy provided by the combustion of this fuel mass and which is converted into heat borne by the exhaust gases, this magnitude $C_1$ being derived from a table with two inputs $N_{mot}$ and $M_{go}$ stored in the memory of the computer.

4. A method as claimed in claim 3, **characterised in that** the correction factor ($f_2$) is calculated using the following formula:

$$f_2 = \sqrt{(P_{col}/P_{amb})}.(C_2/C_3)$$

where:

- ($P_{amb}$) is the ambient air pressure, ($C_2$) is the working passage section of the valve (5) controlling the flow of recycled exhaust gases which is a function of a control signal ($U_R$) of the valve (5) processed by a computer (6) and ($C_3$) is a coefficient taken from a table with two inputs formed by the engine speed ($N_{mot}$) and the pressure in the intake manifold ($P_{col}$).

5. A method as claimed in claim 4, adapted to an engine equipped with air supercharger means (12, 13, 14) comprising a turbine (12) supplied by a fraction of the exhaust gases regulated by a discharge valve (15) controlled by the computer (6) and branch-mounted with respect to the turbine (12), **characterised in that** the coefficient ($C_3$) is representative of the effect of the rate of opening of the discharge valve (15).

6. A method as claimed in any one of the preceding claims, adapted to an engine of the diesel type.